# EUROPEAN PATENT SPECIFICATION

(11) **EP 3 441 430 B1**
(45) Date of publication and mention of the grant of the patent: **25.11.2020**
(21) Application number: 17185976.2
(22) Date of filing: 11.08.2017
(51) Int. Cl.: C09B 7/12, C09B 67/44, D06P 1/22, C09B 67/54

(54) **LEUCOINDIGO SALT SOLUTION WITH VERY LOW CONTENT OF ANILINE AND METHOD OF MAKING SAME**
LEUCOINDIGO-SALZ LÖSUNG MIT SEHR NIEDRIGEM GEHALT VON ANILIN UND VERFAHREN ZUR HERSTELLUNG DAVON
SOLUTION DE SEL DE LEUCOINDIGO À TRÈS FAIBLE TENEUR D'ANILINE ET SON PROCÉDÉ DE FABRICATION

(43) Date of publication of application: 13.02.2019
(73) Proprietor: Archroma IP GmbH, 4153 Reinach (CH)
(72) Inventor: LUCIC, Erwin, Singapore 609917, Singapore (SG); HÜBNER, Jörg, 69115 Heidelberg (DE); HYETT, David, 6132 HS Sittard, (NL); JANSSEN, Michèle Catherine Christianne, 5645 LB Eindhoven, (NL); BESSEMBINDER, Karin Hendrika Maria, 5625 SK Eindhoven, (NL); WOESTENBORGHS, Pierre L., 3650 Dilsen-Stokkem, (BE); RIJKERS, Marinus Petrus Wilhelmus Maria, 6181 DH Elsloo, (NL)
(74) Representative: Ricker, Mathias

(56) References cited:
- WO-A2-2004/024826
- GB-A- 2 283 022
- US-B1- 6 428 581

## Description

### FIELD OF THE INVENTION

The invention is in the field of manufacturing aniline-free leucoindigo salt solutions.

### BACKGROUND OF THE INVENTION

Indigo is a vat dye used for dyeing cellulose-containing textile materials.

For application on a textile material, indigo is subjected to reduction wherein a water-soluble leucoindigo salt is formed. This salt is then applied in aqueous solution to the textile material. Oxidation of the leucoindigo salt results in the formation of indigo, wherein the dyed textile material is obtained.

Synthetically produced indigo contains impurities based on aromatic amines entrapped therein due to the commonly used production processes, in particular aniline and/or N-methylaniline. For example, synthetically produced indigo may contain up to 6,000 ppm aniline and up to 4,000 ppm N-methylaniline. Aromatic amines such as aniline and N-methylaniline are not desired in textile applications. Thus, these impurities should be removed as far as possible from indigo, respectively the leucoindigo salt made therefrom, prior to the application on the textile material.

DE 43 36 032 A1 discloses in Example 1 a process for purifying indigo comprising extracting an aqueous leucoindigo sodium salt solution with an inert solvent under oxygen-excluding conditions, subsequently to the extraction, indigo is conventionally regenerated by oxidation. The obtained indigo is free from aniline and N-methylaniline.

WO 2004/024826 A2 suggests removing aromatic amine impurities on the stage of the aqueous leucoindigo salt solution by distillation, steam distillation, extraction or by stripping with an inert gas. This prior art discloses that the concentration of aromatic amines may be reduced below a content of 200 ppm applying the purification methods defined therein. The purified leucoindigo salt solution may then be subjected to oxidation in order to obtain indigo containing said low amounts of aromatic amines, if any. The purified leucoindigo may present on a textile material prior to the oxidation.

Example 1 of WO 2004/024826 A2 discloses a solution containing 55 % by weight leucoindigo in the form of a mixed sodium and potassium salt obtained from a non-purified leucoindigo salt solution having a salt content of 23 % by distillation under normal pressure, wherein in the purified solution the content of aniline is less than 200 ppm and the content of N-methylaniline is less than 20 ppm.

Example 2 discloses a solution containing 23 % by weight leucoindigo in the form of a mixed sodium and potassium salt obtained from a non-purified leucoindigo salt solution by threefold extraction, wherein in the purified solution the content of aniline is 147 ppm. N-methylaniline is no longer detectable.

Example 3 discloses a solution containing 23 % by weight leucoindigo in the form of a mixed sodium and potassium salt obtained from a non-purified leucoindigo salt solution by stripping with nitrogen, wherein in the purified solution the content of aniline is 113 ppm. N-methylaniline is no longer detectable.

Example 4 discloses a leucoindigo solution in the form of a mixed sodium and potassium salt obtained by steam distillation of a non-purified leucoindigo salt solution. Aniline and N-methylaniline are no longer detectable. The purified leucoindigo solution has a leucoindigo concentration of 7 % by weight. This low-concentrated solution is not applicable to achieve middle or deep shades. Consequently, such leucoindigo solutions would not be of interest for applications at an industrial scale.

It is further known that for transportation and application an aqueous leucoindigo salt solution should be as stable as possible in order to prevent undesired crystallization and/or precipitation of the salt. This is in particular important if the leucoindigo salt is present in the aqueous medium in a relative high concentration. Concentrated leucoindigo salt solutions are advantageous in the vat dying process due to a reduced wastewater contamination.

In this respect, WO 00/04100 suggests providing an aqueous leucoindigo solution in the form of a mixed sodium and potassium salt, wherein the mol-% of sodium is in the range of from 70 to 30, and the mol-% of potassium is correspondingly in the range of from 30 to 70. This corresponds to a molar ratio of sodium to potassium in the range of from 2.33 : 1 to 1 : 2.33. Within said range, despite a relative high concentration of the leucoindigo salt of from 25 to 40 % by weight, said dissolved leucoindigo salt solution is stable at room temperature, or is stable at an increased temperature in the range of from 40 to 60 °C in case of a concentration between 50 and 55 % by weight, i.e. the salt is not prone to crystallization or precipitation. This prior art further discloses a molar ratio of sodium to potassium in the range of from 3 : 1 to 1 : 3, which corresponds to a mol-% range of sodium of from 75 to 25, and potassium of from 25 to 75.

WO 00/04100 further discloses with reference to WO 94/23114 that a solution of leucoindigo in the form of a sodium salt is stable up to a concentration of 20 % by weight at room temperature.

WO 00/04100 further discloses in Example 4 that from diluted leucoindigo solutions water may be distilled off in order to concentrate them. E.g., from a solution having a concentration of 25 % by weight of leucoindigo salt, approx. 44 % by weight water may be distilled off in order to concentrate the solution up to 45 % by weight.

Example 5 of WO 00/04100 discloses that from an aqueous solution containing 20 % by weight leucoindigo salt about 34 % water is distilled off in order to concentrate the solution to 45 % by weight.

WO 00/04100 is silent regarding aniline and N-methylaniline concentrations.

### OBJECTS OF THE INVENTION

There is an ongoing need in the industry for providing concentrated leucoindigo salt solutions in which the content of said aromatic amine is as low as possible. Thus, the problem to be solved by the present invention was to provide purified concentrated leucoindigo salt solutions having an aniline content of far below 200 ppm, i.e. at least less than 100 ppm and in particular at least less than 40 ppm or 30 ppm, preferably less than 20 or 10 ppm or less than 5 ppm or even 0 ppm.

### SUMMARY OF THE INVENTION

The inventors discovered that the amount of water which is distilled off from a leucoindigo salt solution has a crucial influence on the residual amount of aromatic amine in the leucoindigo solution. The inventors discovered that aqueous leucoindigo solutions having a very low content of aromatic amine such as aniline and N-methylaniline may be prepared if water is added to a non-purified leucoindigo solution commonly used in the industry and comprising said amine in order to obtain a diluted leucoindigo solution, and subsequently water is distilled off in a weight which at least equals the weight of said aqueous leucoindigo solution prior to the addition of water. The more water is added and is subsequently distilled off the lower is the content of aromatic amine. The thus obtained concentrated solutions contain less than 40 ppm aromatic amine, preferably less than 30 ppm, or less than 20 ppm or less than 10 ppm. In a preferred embodiment, concentrated solutions may be prepared in which said aromatic amine is no longer detectable. Such solutions may be termed as aniline-free. Accordingly, the term *"less than 100 ppm and in particular less than 40 ppm or less than 30 ppm or less than 20 ppm or less than 10 ppm"* encompasses as lower limit a limit at which the aromatic amine is no longer detectable, i.e. 0 ppm measured according to ISO 14362-1:2017(E).

A further particular advantage of the method according to the invention is that concentrated solutions may be prepared, e.g. in the range of from 10 to 65 % by weight such as 15 to 60 % by weight or 20 to 55 % by weight or 25 to 50 % by weight, which comply with the dyeing requirements in terms of middle and deep shades, and which are aniline-free. Also the requirements of a reduced wastewater contamination in dyeing factories may be met.

Accordingly, the invention relates to the following items:
1. Method of removing an aromatic amine in the form of aniline or aniline and N-methylaniline from an aqueous leucoindigo solution comprising said aromatic amine in order to obtain a purified leucoindigo solution, wherein said leucoindigo is in the form of an alkali metal salt, the method comprising steps (A) and (B):
   (A) adding water to the aqueous leucoindigo solution in order to obtain a diluted leucoindigo solution; and
   (B) subjecting the diluted aqueous leucoindigo solution obtained in step (A) to distillation such that water is distilled off in a weight which at least equals the weight of said aqueous leucoindigo solution used in step (A);
   wherein the concentration of the leucoindigo salt in the solution used in step (A) is in the range of from 5 to 65 % by weight, based on the total weight of the solution; and
   wherein the weight of water added in step (A) and the water distilled off in step (B) are selected such that after step (B) the concentration of the leucoindigo salt in the purified solution is in the range of from 40 to 65 % by weight, based on the total weight of the solution.
2. Method of item 1, wherein the concentration of said aromatic amine in the solution used in step (A) is in the range of from 2,000 ppm to 10,000 ppm.
3. Method of any one of the preceding items, wherein the concentration of aniline in the solution used in step (A) is in the range of from 1,000 ppm to 3,000 ppm and the concentration of N-methylaniline is in the range of from 500 to 2,000 ppm
4. Method of any one of the preceding items, wherein in step (A) water is added in a weight sufficient to allow in step (B) distilling off water in a weight which at least is one and half times the weight of said aqueous leucoindigo solution used in step (A).
5. Method of any one of the preceding items, wherein in step (A) water is added in a weight sufficient to allow in step (B) distilling off water in a weight which at least is twice the weight of said aqueous leucoindigo solution used in step (A).
6. Method of any one of the preceding items, wherein in step (B) distillation is performed under a flow of inert gas.
7. Method of item 1, wherein after step (B) the concentration of the leucoindigo salt in the purified solution is adjusted to a range of from 10 to 45 % by weight based on the total weight of the solution, if necessary by addition of water.

### DETAILED DESCRIPTION OF THE INVENTION

According to a ***first aspect,*** the invention relates to a method of removing an aromatic amine in the form of aniline or aniline and N-methylaniline from an aqueous leucoindigo solution comprising said aromatic amine in order to obtain a purified leucoindigo solution, wherein said leucoindigo is in the form of an alkali metal salt, the method comprising steps (A) and (B):
(A) adding water to the aqueous leucoindigo solution in order to obtain a diluted leucoindigo solution; and
(B) subjecting the diluted aqueous leucoindigo solution obtained in step (A) to distillation such that water is distilled off in a weight which at least equals the weight of said aqueous leucoindigo solution used in step (A);
as defined in claim 1.

The leucoindigo solution used in step (A) is prepared according to methods known in the art, i.e. by subjecting an aqueous composition comprising indigo to a step of reduction in the presence of alkali metal hydroxide.

Accordingly, the method comprises step (0) prior to step (A):
(0) subjecting an aqueous composition comprising indigo which contains an aromatic amine in the form of aniline or aniline and N-methylaniline, to reduction in the presence of an alkali metal hydroxide in order to generate an aqueous leucoindigo solution comprising said aromatic amine, wherein said leucoindigo is in the form of an alkali metal salt.

Preferably, reduction is performed as hydrogenation. Hydrogenation may be performed by methods known in the art.

A preferred reduction is hydrogenation using Raney-Nickel as catalyst.

According to the invention, said leucoindigo is in the form of an alkali metal salt.

The term *"alkali metal"* encompasses lithium, sodium and potassium and combinations of two or three thereof.

Accordingly, in one embodiment, the alkali metal may be lithium or sodium or potassium.

In another embodiment, the alkali metal may be lithium and sodium, or lithium and potassium, or sodium and potassium.

In another embodiment, the alkali metal is lithium, sodium and potassium.

The term *"lithium, sodium, and potassium"* means the respective cations thereof.

The amount of alkali metal in the leucoindigo salt essentially corresponds to an amount which stoichiometrically corresponds to the amount which is necessary for the complete formation of the leucoindigo salt. Preferably, the salt and/or the solution contains from 1.5 to 2.5 mole alkali per mole leucoindigo, more preferably of from 2.0 to 2.5 mole alkali, still more preferred of from 2.1 to 2.5 mole alkali.

In one embodiment, the salt is a sodium salt, e.g. the salt disclosed in WO 94/23114.

In one embodiment, the salt is in the form of a mixed alkali metal salt such as a mixed sodium and potassium salt.

In one embodiment, sodium and potassium are present in a molar ratio as disclosed in WO 00/004100, e.g. in a molar ratio of from 2.33 : 1 to 1 : 2.33.

In another embodiment, sodium and potassium are present in a molar ratio of from 3 : 1 to 1 : 3.

In another embodiment, sodium and potassium are present in a molar ratio of from above 3 : 1 to 10 : 1 such as 4 : 1 to 8 : 1 or 5 : 1 to 7 : 1.

The person skilled in the art is capable of selecting suitable concentration ranges in which the respective purified leucoindigo solutions made from the non-purified leucoindigo solutions are stable depending on the used molar ratios.

Thus, within the addressed molar ranges of sodium to potassium, stable and concentrated solutions may be prepared.

In a preferred embodiment, the leucoindigo salt is provided in the form of a mixed alkali metal salt, preferably a mixed sodium and potassium salt, further preferably in a molar ratio of sodium to potassium in the range of from 2.33 : 1 to 1 : 2.33.

It is possible to provide the required amount of alkali metal hydroxide at once prior to the hydrogenation or in portions during the hydrogenation, or prior and during the hydrogenation. If necessary, additional alkali may also be added after the hydrogenation.

The concentration of the salt obtained after step (0) or used in step (A) can be chosen within broad boundaries and is not restricted to particular requirements.

In one embodiment, the concentration of the leucoindigo salt in the solution obtained in step (0) is in the range of from 5 to 65 % by weight, based on the total weight of the solution obtained in step (0), such as 10 to 65 % by weight or 15 to 60 % by weight or 20 to 55 % by weight or 25 to 50 % by weight or 25 to 45 % by weight.

According to the invention, the concentration of the leucoindigo salt in the solution used in step (A) is in the range of from 5 to 65 % by weight, based on the total weight of the solution used in step (A).

In one embodiment, the concentration of the leucoindigo salt in the solution used in step (A) is from 10 to 65 % by weight or 15 to 60 % by weight or 20 to 55 % by weight or 25 to 50 % by weight or 25 to 45 % by weight, based on the total weight of the solution used in step (A).

In another embodiment, the concentration of the leucoindigo salt in the solution obtained in step (0) or used in step (A) is in the range of from 10 to 35 % by weight, based on the total weight of the solution obtained in step (0) or used in step (A).

As discussed in the Background section, a leucoindigo salt solution obtained by reduction of indigo contains an aromatic amine in the form of aniline or aniline and N-methylaniline stemming from the commonly used production processes of indigo.

In one embodiment, the concentration of said aromatic amine in the solution obtained in step (0) or used in step (A) prior to purification according to step (B) is in the range of from 2,000 ppm to 10,000 ppm.

In one embodiment, the concentration of aniline is in the range of from 1,000 ppm to 3,000 ppm and the concentration of N-methylaniline is in the range of from 500 to 2,000 ppm.

According to the invention, in step (A) water is added in a weight sufficient to allow in step (B) distilling off water in a weight which at least equals the weight of said aqueous leucoindigo solution used in step (A). This means nothing else than that after distillation according to step (B) still an aqueous solution is obtained, i.e. a composition which still contains water and forms a solution, at least at distillation temperature.

The method according to step (B) is preferably performed as a batch process.

During distillation according to step (B), said aromatic amine is removed together with water as an azeotropic mixture.

In a further preferred embodiment, in step (A) water is added in a weight sufficient to allow in step (B) distilling off water in a weight which at least is one and half times the weight of said aqueous leucoindigo solution used in step (A).

In a particular preferred embodiment, in step (A) water is added in a weight sufficient to allow in step (B) distilling off water in a weight which at least is twice the weight of said aqueous leucoindigo solution used in step (A).

In another embodiment, in step (A) water is added in a weight sufficient to allow in step (B) distilling off water in a weight which at least is thrice the weight of said aqueous leucoindigo solution used in step (A).

In still another embodiment, in step (A) water is added in a weight sufficient to allow in step (B) distilling off water in a weight which is not more than four times the weight of said aqueous leucoindigo solution used in step (A).

In a further preferred embodiment, in step (A) water is added in a weight sufficient to allow in step (B) distilling off water in a weight which at least equals the weight of said aqueous leucoindigo solution used in step (A), and is not more than four times the weight of said aqueous leucoindigo solution used in step (A).

In a further preferred embodiment, in step (A) water is added in a weight sufficient to allow in step (B) distilling off water in a weight which at least is one and half times the weight of said aqueous leucoindigo solution used in step (A), and is not more than four times the weight of said aqueous leucoindigo solution used in step (A).

In a particular preferred embodiment, in step (A) water is added in a weight sufficient to allow in step (B) distilling off water in a weight which at least is twice the weight of said aqueous leucoindigo solution used in step (A); and is not more than four times the weight of said aqueous leucoindigo solution used in step (A).

In another embodiment, in step (A) water is added in a weight sufficient to allow in step (B) distilling off water in a weight which at least is thrice the weight of said aqueous leucoindigo solution used in step (A), and is not more than four times the weight of said aqueous leucoindigo solution used in step (A).

In still another embodiment, in step (A) water is added in a weight sufficient to allow in step (B) distilling off water in a weight which is not more than four times the weight of said aqueous leucoindigo solution used in step (A).

Distillation may be performed according to methods known in the art.

In one embodiment, distillation may be performed at reduced pressure.

In one embodiment, distillation may be performed at elevated pressure.

In a preferred embodiment, the distillation is performed at normal pressure.

It is preferred to exclude presence of oxygen during distillation in order to avoid an untimely oxidation of leucoindigo to indigo. Therefore, distillation according to step (B) should be performed under inert gas such as nitrogen.

In one embodiment, in step (B) distillation is performed under a flow of inert gas, i.e. the aqueous solution subjected to distillation is at the same time stripped.

A suitable inert gas or stripping gas is nitrogen.

Due to the distillation of water and amine, the solution obtained in step (B) is concentrated with respect to the solution used in step (B), respectively obtained after step (A).

In one embodiment, the concentration of the leucoindigo salt in the solution obtained in step (0) is in the range of from 5 to 65 % by weight such as 10 to 60 % by weight or 15 to 55 % by weight or 20 to 50 % by weight or 25 to 45 % by weight, based on the total weight of the solution obtained in step (0).

According to the invention, the concentration of the leucoindigo salt in the solution used in step (A) is in the range of from 5 to 65 % by weight such as 10 to 60 % by weight or 15 to 55 % by weight or 20 to 50 % by weight or 25 to 45 % by weight, based on the total weight of the solution obtained in step (0) or used in step (A).

According to the invention, the concentration of the leucoindigo salt in the purified solution obtained after step (B) is in the range of from 45 to 65 % by weight, based on the total weight of the solution.

In one embodiment, the concentration of the leucoindigo salt in the solution obtained in step (0) or used in step (A) is in the range of from 10 to 40 % by weight, and after step (B), the concentration of the leucoindigo salt in the purified solution is in the range of from 45 to 65 % by weight, based on the total weight of the solution.

Thus, according to the invention, the weight of water added in step (A) and the water distilled off in step (B) are selected such that after step (B) the concentration of the leucoindigo salt in the purified solution is in the range of from 45 to 65 % by weight, based on the total weight of the solution.

The thus obtained concentrated solutions contain less than 40 ppm or less than 30 ppm aromatic amine, preferably less than 20 ppm or less than 10 ppm or even less than 5 ppm.

If necessary, the solution obtained in step (B) may be diluted to a predetermined concentration range adapted to application or stability requirements.

In one embodiment, the concentration is adjusted to a range of from 10 to 45 % by weight such as 15 to 45 % by weight, if necessary by addition of water. Other suitable concentration ranges are e.g. 20 to 45 % by weight or 25 to 45 % by weight.

It is a matter of course that upon dilution the content of aromatic amine is further decreased.

In a preferred embodiment, said aromatic amine is no longer detectable. Such solutions may be termed as aniline-free.

In one embodiment, the concentration of the leucoindigo salt is adjusted to a concentration range of from 10 to 45 % by weight such as 15 to 45 % by weight or 20 to 45 % by weight or 25 to 45 % by weight based on the total weight of the solution, in order to provide a stable leucoindigo salt solution, and wherein the stability of the solution is measured at a temperature of 23 °C.

The term *"stability of the solution"* refers to a solution which is not prone to crystallization or precipitation at the specifies temperature.

In another embodiment, the concentration of the leucoindigo salt is in a concentration range of from 45 to 65 % by weight based on the total weight of the solution, and wherein the stability of the solution is measured at a temperature of 60 °C.

According to a ***second aspect,*** in one embodiment, a stable aqueous leucoindigo solution is disclosed comprising an aromatic amine in the form of aniline or aniline and N-methylaniline, wherein said leucoindigo is in the form of an alkali metal salt;
wherein the concentration of the aromatic amine is below 40 ppm determined according to ISO 14362-1:2017(E); and
wherein the concentration of the leucoindigo salt is in a concentration range of from 10 to 45 % by weight such as 15 to 45 % by weight or 20 to 45 % by weight or 25 to 45 % by weight based on the total weight of the solution, and wherein the stability of the solution is measured at a temperature of 23 °C.

In another embodiment, a stable aqueous leucoindigo solution is disclosed comprising an aromatic amine in the form of aniline or aniline and N-methylaniline, wherein said leucoindigo is in the form of an alkali metal salt;
wherein the concentration of the aromatic amine is below 100 ppm determined according to ISO 14362-1:2017(E); and
wherein the concentration of the leucoindigo salt is in a concentration range of from 45 to 65 % by weight such as 45 to 60 % by weight based on the total weight of the solution, and wherein the stability of the solution is measured at a temperature of 60 °C.

In a preferred embodiment, the concentration of the aromatic amine is below 40 ppm.

In a further preferred embodiment, the concentration of the aromatic amine is below 30 ppm.

In another preferred embodiment, the concentration of the aromatic amine is below 20 ppm.

In another preferred embodiment, the concentration of the aromatic amine is below 10 ppm.

In another preferred embodiment, the concentration of the aromatic amine is below 5 ppm.

In another preferred embodiment, the concentration of the aromatic amine is no longer detectable.

The leucoindigo salt obtained in the method according to the ***first aspect*** or the aqueous leucoindigo solution defined in the ***second aspect*** according to the invention may be converted to indigo or may be used in a vat dyeing process for dyeing a textile.

Accordingly, in a ***third aspect,*** a method of making indigo is disclosed, comprising step (D):
(D) oxidizing the aqueous leucoindigo solution as defined in the ***second aspect.***

In one embodiment, the method comprises step (C) prior to step (D):
(C) treating a textile with the leucoindigo solution as defined in the ***second aspect.***

### EXAMPLES

### Example 1 (Comparative)

1,000 g of a 30 % by weight leucoindigo solution (containing 6.5 % by weight alkali metal, 2,495 ppm aniline and 1,480 ppm N-methylaniline) were subjected to distillation at ambient pressure. After 470 ml water had been distilled off, a 57 % by weight solution was obtained. The content of aniline in the obtained concentrated solution was 173 ppm and the N-methylamine concentration was 9 ppm determined according to ISO 14362-1:2017(E).

### Example 2

1,000 g water was added to 2,000 g of a 30 % by weight leucoindigo solution (containing 6 to 7 % by weight alkali metal, 2,380 ppm aniline and 1,375 ppm N-methylaniline). Subsequently, the composition was subjected to distillation at ambient pressure. After 2,000 ml water had been distilled off, a 60 % by weight solution was obtained. The content of aniline in the obtained concentrated solution was 38 ppm and the N-methylamine concentration was 2.0 ppm determined according to ISO 14362-1:2017(E).

### Example 3

2,000 g water was added to 2,000 g of a 30 % by weight leucoindigo solution (containing 6.5 % by weight alkali metal, 2,350 ppm aniline and 1,335 ppm N-methylaniline). Subsequently, the composition was subjected to distillation at ambient pressure. After 3,000 ml water had been distilled off, a 60 % by weight solution was obtained. The content of aniline in the obtained concentrated solution was 16 ppm and the N-methylamine concentration was 0.3 ppm determined according to ISO 14362-1:2017(E).

### Example 4

3,000 g water was added to 2,000 g of a 30 % by weight leucoindigo solution (containing 6.5 % by weight alkali metal, 2,164 ppm aniline and 1,170 ppm N-methylaniline). Subsequently, the composition was subjected to distillation at ambient pressure. After 4,000 ml water had been distilled off, a 60 % by weight solution was obtained. The content of aniline in the obtained concentrated solution was 5 ppm determined according to ISO 14362-1:2017(E). N-methylamine was not detectable.

### Example 5

1,000 g of the leucoindigo solution obtained in Example 4 was diluted with 500 g water to result in a 40 % by weight solution. This solution had an aniline content below 5 ppm determined according to ISO 14362-1:2017(E). The solution was used in vat dyeing and provided for deep shades.

## Claims

1. Method of removing an aromatic amine in the form of aniline or aniline and N-methylaniline from an aqueous leucoindigo solution comprising said aromatic amine in order to obtain a purified leucoindigo solution, wherein said leucoindigo is in the form of an alkali metal salt, the method comprising steps
(A) and (B):
(A) adding water to the aqueous leucoindigo solution in order to obtain a diluted leucoindigo solution; and
(B) subjecting the diluted aqueous leucoindigo solution obtained in step (A) to distillation such that water is distilled off in a weight which at least equals the weight of said aqueous leucoindigo solution used in step (A),
wherein the concentration of the leucoindigo salt in the solution used in step (A) is in the range of from 5 to 65 % by weight, based on the total weight of the solution; and
wherein the weight of water added in step (A) and the water distilled off in step (B) are selected such that after step (B) the concentration of the leucoindigo salt in the purified solution is in the range of from 40 to 65 % by weight, based on the total weight of the solution.

2. Method of claim 1, wherein the concentration of said aromatic amine in the solution used in step (A) is in the range of from 2,000 ppm to 10,000 ppm.

3. Method of any one of the preceding claims, wherein the concentration of aniline in the solution used in step (A) is in the range of from 1,000 ppm to 3,000 ppm and the concentration of N-methylaniline is in the range of from 500 to 2,000 ppm.

4. Method of any one of the preceding claims, wherein in step (A) water is added in a weight sufficient to allow in step (B) distilling off water in a weight which at least is one and half times the weight of said aqueous leucoindigo solution used in step (A).

5. Method of any one of the preceding claims, wherein in step (A) water is added in a weight sufficient to allow in step (B) distilling off water in a weight which at least is twice the weight of said aqueous leucoindigo solution used in step (A).

6. Method of any one of the preceding claims, wherein in step (B) distillation is performed under a flow of inert gas.

7. Method of claim 1, wherein after step (B) the concentration of the leucoindigo salt in the purified solution is adjusted to a range of from 10 to 45 % by weight based on the total weight of the solution, if necessary by addition of water.

## Patentansprüche

1. Verfahren zur Entfernung eines aromatischen Amins in Form von Anilin oder Anilin und N-Methylanilin aus einer wässrigen Leukoindigolösung, die das aromatische Amin enthält, um eine gereinigte Leukoindigolösung zu erhalten, wobei der Leukoindigo in Form eines Alkalimetallsalzes vorliegt, wobei das Verfahren die Schritte (A) und (B) aufweist:
(A) Zugabe von Wasser zu der wässrigen Leukoindigolösung, um eine verdünnte Leukoindigolösung zu erhalten; und
(B) Unterziehen der in Schritt (A) erhaltenen verdünnten wässrigen Leukoindigolösung einer Destillation, so dass Wasser in einem Gewicht abdestilliert wird, das mindestens gleich dem Gewicht der in Schritt (A) verwendeten wässrigen Leukoindigolösung ist,
wobei die Konzentration des Leukoindigosalzes in der in Schritt (A) verwendeten Lösung im Bereich von 5 bis 65 Gew.-%, bezogen auf das Gesamtgewicht der Lösung, liegt; und
wobei das Gewicht des in Schritt (A) zugegebenen Wassers und des in Schritt (B) abdestillierten Wassers so gewählt ist, dass nach Schritt (B) die Konzentration des Leukoindigosalzes in der gereinigten Lösung im Bereich von 40 bis 65 Gew.-%, bezogen auf das Gesamtgewicht der Lösung, liegt.

2. Verfahren nach Anspruch 1, wobei die Konzentration des aromatischen Amins in der in Schritt (A) verwendeten Lösung im Bereich von 2 000 ppm bis 10 000 ppm liegt.

3. Verfahren nach einem der vorstehenden Ansprüche, wobei die Anilinkonzentration in der in Schritt (A) verwendeten Lösung im Bereich von 1 000 ppm bis 3 000 ppm liegt und die Konzentration von N-Methylanilin im Bereich von 500 bis 2 000 ppm liegt.

4. Verfahren nach einem der vorstehenden Ansprüche, wobei in Schritt (A) Wasser in einem Gewicht zugegeben wird, das ausreicht, um in Schritt (B) das Abdestillieren von Wasser in einem Gewicht zu ermöglichen, das mindestens das Anderthalbfache des Gewichts der in Schritt (A) verwendeten wässrigen Leukoindigolösung beträgt.

5. Verfahren nach einem der vorstehenden Ansprüche, wobei in Schritt (A) Wasser in einem Gewicht zugegeben wird, das ausreicht, um in Schritt (B) das Abdestillieren von Wasser in einem Gewicht zu ermöglichen, das mindestens das Doppelte des Gewichts der in Schritt (A) verwendeten wässrigen Leukoindigolösung beträgt.

6. Verfahren nach einem der vorstehenden Ansprüche, wobei in Schritt (B) die Destillation unter einem Strom von Inertgas durchgeführt wird.

7. Verfahren nach Anspruch 1, bei dem nach Schritt (B) die Konzentration des Leukoindigosalzes in der gereinigten Lösung auf einen Bereich von 10 bis 45 Gew.-%, bezogen auf das Gesamtgewicht der Lösung eingestellt wird, falls erforderlich, durch Zugabe von Wasser.

## Revendications

1. Procédé d'élimination d'une amine aromatique sous forme d'aniline ou d'aniline et de N-méthylaniline dans une solution aqueuse de leuco-indigo comprenant ladite aminé aromatique afin d'obtenir une solution de leuco-indigo purifiée, dans lequel ledit leuco-indigo est sous la forme d'un sel de métal alcalin, le procédé comprenant les étapes (A) et (B) :
(A) addition d'eau à la solution aqueuse de leuco-indigo afin d'obtenir une solution de leuco-indigo diluée ; et
(B) soumission de la solution aqueuse de leuco-indigo diluée obtenue dans l'étape (A) à une distillation de sorte que l'eau est éliminée par distillation en un poids au moins égal au poids de ladite solution aqueuse de leuco-indigo utilisée dans l'étape (A),
dans lequel la concentration du sel de leuco-indigo dans la solution utilisée dans l'étape (A) est située dans la plage allant de 5 à 65 % en poids par rapport au poids total de la solution ; et
dans lequel le poids de l'eau ajoutée dans l'étape (A) et le poids de l'eau éliminée par distillation dans l'étape (B) sont choisis de façon qu'après l'étape (B) la concentration du sel de leuco-indigo dans la solution purifiée est située dans la plage allant de 40 à 65 % en poids par rapport au poids total de la solution.

2. Procédé selon la revendication 1, dans lequel la concentration de ladite amine aromatique dans la solution utilisée dans l'étape (A) est située dans la plage allant de 2 000 ppm à 10 000 ppm.

3. Procédé selon l'une quelconque des revendications précédentes, dans lequel la concentration d'aniline dans la solution utilisée dans l'étape (A) est située dans la plage allant de 1 000 ppm à 3 000 ppm et la concentration de N-méthylaniline est située dans la plage allant de 500 à 2 000 ppm.

4. Procédé selon l'une quelconque des revendications précédentes, dans lequel, dans l'étape (A), l'eau est ajoutée en un poids suffisant pour permettre, dans l'étape (B), l'élimination par distillation d'eau en un poids qui est d'au moins une fois et demi le poids de ladite solution aqueuse de leuco-indigo utilisée dans l'étape (A).

5. Procédé selon l'une quelconque des revendications précédentes, dans lequel, dans l'étape (A), l'eau est ajoutée en un poids suffisant pour permettre, dans l'étape (B), l'élimination par distillation d'eau en un poids qui est d'au moins deux fois le poids de ladite solution aqueuse de leuco-indigo utilisée dans l'étape (A).

6. Procédé selon l'une quelconque des revendications précédentes, dans lequel, dans l'étape (B), la distillation est effectuée sous un courant de gaz inerte.

7. Procédé selon la revendication 1, dans lequel, après l'étape (B), la concentration du sel de leuco-indigo dans la solution purifiée est ajustée dans la plage allant de 10 à 45 % en poids par rapport au poids total de la solution, si nécessaire par l'addition d'eau.
